(19) Europäisches Patentamt
European Patent Office
Office européen des brevets

(11) **EP 3 216 098 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(21) Anmeldenummer: **16751210.2**

(22) Anmeldetag: **25.07.2016**

(51) Int Cl.:
**H02J 3/01** (2006.01)     **H02M 1/00** (2006.01)
**H02M 1/12** (2006.01)

(86) Internationale Anmeldenummer:
**PCT/EP2016/067678**

(87) Internationale Veröffentlichungsnummer:
**WO 2017/013269 (26.01.2017 Gazette 2017/04)**

(54) **FILTERSCHALTUNG FÜR NEUTRALLEITERSTROMKOMPENSATION IN ENERGIENETZEN**

FILTER CIRCUIT FOR COMPENSATING NEUTRAL CONDUCTOR CURRENTS IN POWER NETWORKS

CIRCUIT DE FILTRAGE POUR COMPENSER LES COURANTS DE NEUTRE DANS LES RÉSEAUX ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2015 DE 202015103872 U**

(43) Veröffentlichungstag der Anmeldung:
**13.09.2017 Patentblatt 2017/37**

(73) Patentinhaber:
• **Stock, Birgit**
**83700 Rottach-Egern (DE)**
• **Wullinger, Katharina**
**9478 Azmoos (CH)**

(72) Erfinder: **RECKMANN, Robert**
**83714 Miesbach (DE)**

(74) Vertreter: **2s-ip Schramm Schneider Bertagnoll Patent- und Rechtsanwälte Part mbB**
**Postfach 86 02 67**
**81629 München (DE)**

(56) Entgegenhaltungen:
**JP-A- 2014 117 022**

• **REDL R ET AL: "Power-factor correction in bridge and voltage-doubler rectifier circuits with inductors and capacitors", APPLIED POWER ELECTRONICS CONFERENCE AND EXPOSITION, 1995. APEC '95. C ONFERENCE PROCEEDINGS 1995., TENTH ANNUAL DALLAS, TX, USA 5-9 MARCH 1995, NEW YORK, NY, USA,IEEE, US, 5. März 1995 (1995-03-05), Seiten 466-472, XP010147625, DOI: 10.1109/APEC.1995.468989 ISBN: 978-0-7803-2482-4**
• **YUNGTAEK JANG ET AL: "Bridgeless High-Power-Factor Buck Converter", IEEE TRANSACTIONS ON POWER ELECTRONICS, INSTITUTE OF ELECTRICAL AND ELECTRONICS ENGINEERS, USA, Bd. 26, Nr. 2, 1. Februar 2011 (2011-02-01), Seiten 602-611, XP011382806, ISSN: 0885-8993, DOI: 10.1109/TPEL.2010.2068060**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Filterschaltung für elektrische Energienetze. Derartige Schaltungen werden z.B. im Stromnetz des Endverbrauchers zwischen dem Energiezähler des Energieversorgungsunternehmens (EVU) und dem Niederspannungsverteiler (also bis etwa 400 Volt) eingesetzt, um beim Endverbraucher entstehende Störgrößen zu unterdrücken, z.B. die Blindleistung zu kompensieren. Bei dem Endverbraucher handelt es sich üblicherweise um Abnehmer größerer Energiemengen und Leistungen (Größenordnung z.B. 10 kVA oder mehr pro Phase oder Leitungsstrang), also um Gewerbebetriebe und Großunternehmen. In solchen Netzen müssen vorgegebene elektrische Standards erfüllt sein. Die Schaltungen können allgemein in Klein-, Nieder- und Hochspannungsnetzen eingesetzt werden.

Andererseits können solche Störungen auch bei der Erzeugung von elektrischer Energie in dezentralen Anlagen entstehen, also etwa in Windenergieanlagen, Photovoltaik-Anlagen und Biogasanlagen.

REDL R ET AL, "Power-factor correction in bridge and voltage-doubler rectifier circuits with inductors and capacitors", in APPLIED POWER ELECTRONICS CONFERENCE AND EXPOSITION, 1995. APEC '95. C ONFERENCE PROCEEDINGS 1995., TENTH ANNUAL DALLAS, TX, USA 5-9 MARCH 1995, NEW YORK, NY, USA,IEEE, US, (19950305), doi:10.1109/APEC.1995.468989, ISBN 978-0-7803-2482-4, Seiten 466 - 472, betrifft Leistungsfaktor-Korrektur in Einphasen-Brücken und Spannungsverdopplungs-Gleichrichterschaltungen mit Dioden, Spulen und Kondensatoren, wobei die Spulen in Serie mit der Phasenleitung auf der Wechselstromseite oder auf der Gleichstromseite geschaltet sind.

YUNGTAEK JANG ET AL, "Bridgeless High-Power-Factor Buck Converter", in IEEE TRANSACTIONS ON POWER ELECTRONICS, INSTITUTE OF ELECTRICAL AND ELECTRONICS ENGINEERS, USA, (20110201), vol. 26, no. 2, doi:10.1109/TPEL.2010.2068060, ISSN 0885-8993, Seiten 602 - 611, betrifft brückenlose Einphasen-Abwärtswandler mit hohem Leistungsfaktor mit Dioden, Spulen und Kondensatoren, wobei die Spulen in Serie mit der Phasenleitung geschaltet sind.

Die Erfindung, wie sie in den Schutzansprüchen definiert ist, stellt eine Dreiphasen-Filterschaltung bereit, welche Störgrößen auf dem Neutralleiter unterdrückt.

Bei dem Niederspannungsnetz handelt es sich um dreiphasiges Netz. Die Erfindung wird anhand von Ausführungsbeispielen in Verbindung mit der Zeichnung näher beschrieben. Hierin zeigt

Fig. 1 ein Schaltungsteil einer Ausführungsform der Erfindung für eine Phase,

Fig. 2 Diagramme zur Erläuterung der Schaltung gemäß Fig. 1;

Fig. 3-5 den Aufbau der Spulenelemente gemäß Ausführungsformen der Erfindung.

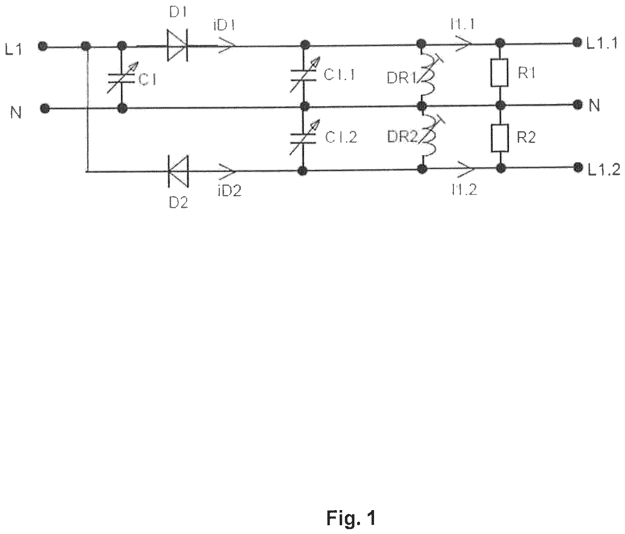

Fig. 1 zeigt die Schaltung für den Einsatz in einem einphasigen Niederspannungsnetz mit dem Phasenleiter L1 und dem Neutralleiter N. Die Schaltung umfasst einen ersten Leitungsstrang L1.1, der eingangsseitig über ein erstes Diodenelement D1 mit dem Phasenleiter L1 verbindbar ist, einen zweiten Leitungsstrang L1.2, der eingangsseitig über ein zweites Diodenelement D2 mit dem Phasenleiter L1 verbindbar ist, wobei die beiden Diodenelemente D1, D2 mit Bezug zum Phasenleiter L1 entgegengesetzt zueinander orientiert sind, wobei zwischen dem ersten Leitungsstrang L1.1 und dem Neutralleiter N des Niederspannungsnetzes ein erstes Spulenelement DR1 angeordnet ist und zwischen dem zweiten Leitungsstrang L1.2 und dem Neutralleiter N ein zweites Spulenelement DR2 angeordnet ist, wobei die beiden Spulenelemente DR1, DR2 induktiv miteinander gekoppelt sind.

Des Weiteren ist zwischen dem ersten Leitungsstrang L1.1 und dem Neutralleiter N ein erstes Kondensatorelement C1.1 angeordnet, und zwischen dem zweiten Leitungsstrang L1.2 und dem Neutralleiter N ist ein zweites Kondensatorelement C1.2 angeordnet. Diese beiden Kondensatorelemente C1.1, C1.2 dienen dazu, den Leistungsfaktor cos φa zu kompensieren. R1 und R2 symbolisieren die sekundärseitig angeschlossenen Verbraucher.

Die beiden Spulenelemente DR1, DR2 sind über einen gemeinsamen Kern induktiv miteinander gekoppelt. Die bilden einen Transformator mit dem Übersetzungsverhältnis 1, also identischen Wicklungszahlen $n1=n2$.

Das Spulenelement DR1 und das Kondensatorelement C1.1 sind hierbei so dimensioniert, dass sie bei einer Frequenz von 50 Hz einen Resonanzkreis bilden. In gleicher Weise sind das Spulenelement DR2 und das Kondensatorelement C1.2 so dimensioniert, dass sie bei einer Frequenz von $f$=50 Hz einen Resonanzkreis bilden.

Es gilt also jeweils die Bedingung:

$$\omega \, L = 1/\omega \, C,$$

mit der Kreisfrequenz $\omega = 2\pi f$ und wobei L die Induktivität des Spulenelements DR1 bzw. DR2 und C die Kapazität des Kondensatorelements C1.1 bzw. C1.2 ist.

Wenn eingangsseitig der Filterschaltung, also zwischen den Leitern L1 und N, eine sinusförmige elektrische Größe mit der Frequenz 50Hz anliegt, also z.B. die 230V-Netzwechselspannung aus dem Versorgungsnetz, so wird diese periodische Vollwelle durch die beiden Diodenelemente D1 und D2 in zwei Halbwellen auf geteilt, und zwar in eine positive (obere) und eine negative (untere) Halbwelle.

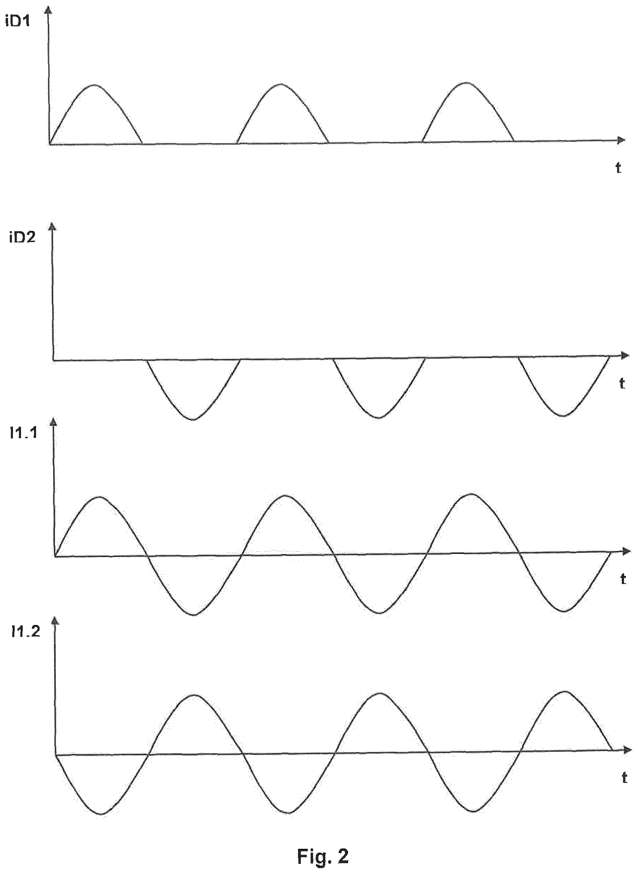

In Fig. 2 zeigt das obere Diagramm den zeitlichen Verlauf des Stromes iD1, der durch das erste Diodenelement D1 fließt. Wie zu erkennen ist, lässt das erste Diodenelement D1 nur die positiven sinusförmigen Halbwellen durch. Das zweite Diodenelement D2 lässt nur die negativen sinusförmigen Halbwellen durch, vgl. das zweite Diagramm. Die negative Halbwellen werden im ersten (oberen) Leitungsstrang mittels des magnetischen Flusses erzeugt, der durch das zweite Spulenelement DR2 durch die negativen Halbwellen im zweiten (unteren) Leitungsstrang L1.2 generiert wird, so dass am Ausgang L1.1 wieder eine periodische sinusförmige Vollwelle I1.1 bereitgestellt wird, vgl. das dritte Diagramm der Fig. 2.

Im Leitungsstrang L1.2 sind alle Polaritäten umgekehrt. Das entgegengesetzt geschaltete Diodenelement D2 lässt nur die negativen Halbwellen passieren und sperrt die positiven Halbwellen. Hier werden die positiven Halbwellen durch den magnetischen Fluss induziert, der durch im ersten Spulenelement DR1 die positiven Halbwellen im ersten Leitungsstrang L1.1 erzeugt werden, vgl. das vierte Diagramm der Fig. 2. Es wird also am Ausgang L1.2 eine periodische Vollwelle I1.2 bereitgestellt, die um 180 Grad phasenverschoben gegenüber der Vollwelle am Ausgang L1.1 ist.

Auf diese Weise werden ausgangsseitig saubere sinusförmige Wellen generiert, ohne Oberwellenanteile und nahezu ohne Gleichanteile auf dem Neutralleiter, und zwar unabhängig von der Belastung am Ausgang.

Zwischen dem Phasenleiter L1 und dem Neutralleiter N kann ein drittes Kondensatorelement C1 angeordnet sein.

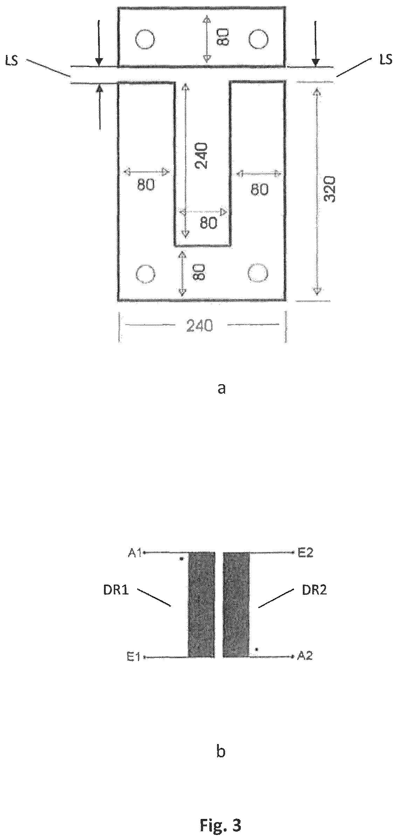

Was die Spulenelemente DR1, DR2 anbelangt, so ist der Kern in dieser Ausführungsform der Erfindung UI-förmig mit zwei Schenkeln und einem Joch ausgestaltet. , wobei auf jedem Schenkel eines der Spulenelemente DR1, DR2 aufgewickelt ist. vgl. Fig. 3a. Der Kern weist zwischen Joch und Schenkeln jeweils einen Luftspalt LS auf. Die beiden Spulenelemente DR1, DR2 sind gegensinnig aufgewickelt bzw. angeschlossen, d.h. so, dass die Position des Eingangs E1 des ersten Spulenelements DR1 am einen Schenkel der Position des Ausgangs A2 des zweiten Spulenelements DR2 am anderen Schenkel entspricht und die Position des Ausgangs des ersten Spulenelements DR1 der Position des Eingangs E2 des anderen Spulenelements DR2 entspricht, vgl. Fig. 3b.

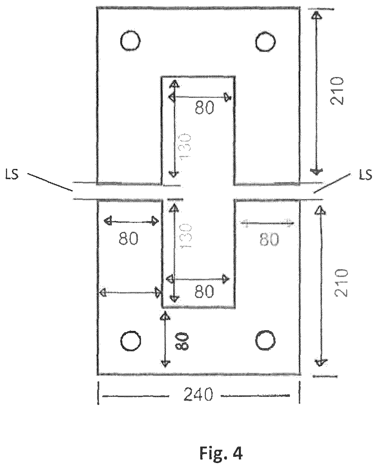

Der Kern kann aber auch UU-förmig mit jeweils zwei Halbschenkeln ausgestaltet sein, wobei auf jedem Halbschenkel eines der Spulenelemente DR1, DR2 aufgewickelt ist. Der Kern weist dann zwischen den Halbschenkeln jeweils einen Luftspalt LS auf, vgl. Fig. 4.

Die Leistungen sind abhängig vom Kern der Spule, dem entstehenden magnetischen Fluss, den Windungsquerschnitten, dem Luftspalt und der anliegenden Spannung. Somit sind mit dieser Schaltung nahezu alle Größenordnungen möglich in beliebigen Leistungsstufen.

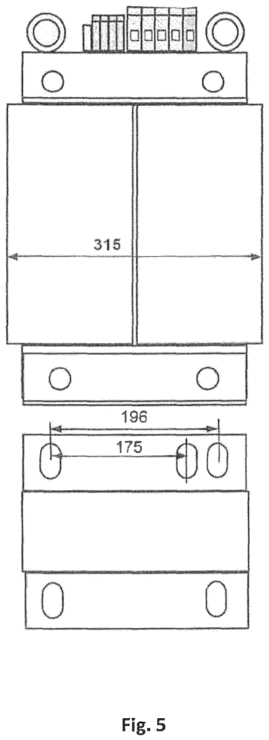

Fig. 5 illustriert den Aufbau der Spulenelemente DR1 und DR2 gemäß einer ausführungsform der Erfindung. Diese sind jeweils durch Kupferdraht mit dem Querschnitt von $21{,}82mm^2$ gebildet, der auf einen gemeinsamen Transformatorkern mit dem aufgewickelt ist. Die Wicklungszahlen sind für beide Spulenelemente DR1, DR2 identisch, und zwar n1=n2=200. Der magnetische Fluss durch den Transformatorkern ist über ein Joch J mit Luftspalt LS geschlossen. Die Höhe des Transformatorkerns inklusive Joch beträgt 440mm und die Breite beträgt 315 mm. Geringfügige Abweichungen hiervon sind möglich.

Die Schaltung kann aber auch mittels zweier getrennter Drosselspulen realisiert sein, die aber auch im Gegensinn betrieben werden.

Der durch den Gleichrichter entstehende Gleichstrom- und Gleichspannungsanteil wird durch die erfindungsgemäße Schaltung nahezu auf Null gesetzt. Somit wird durch diese Schaltung eine hervorragende Netzqualität nahezu ohne Gleichanteile am Ausgang L1.1 und L1.2 gegen den Neutralleiter zur Verfügung stehen und somit auch die Oberschwingungen reduziert werden. Der Vorgang ist leistungsabhängig und kann mittels der Kondensatorelemente C1.1 und C1.2 verändert werden.

Die Schaltungsanordnung kann für Industrieanlagen verwendet werden, die hohe Energiemengen beziehen, z.B. Galvanisierungsanlagen. Andererseits auch für Kleinstromverbraucher und allgemein in Netzteile. Ein weiterer Anwendungsfall ist die Parallelschaltung mehrerer Stromerzeuger. Die Schaltung kann auch in der Energieversorgung für Kfz-Ladeeinrichtungen verwendet werden, ebenso bei der Energieerzeugung in Photovoltaikanlagen, Windenergieanlagen oder Biogasanlagen. Ein weiterer Anwendungsfall sind Klimaanlagen.

Das beschriebene Beispiel ist zum Betrieb an einem 230V-/50Hz-Wechselspannungsnetz vorgesehen. Selbstverständlich lässt sich die erfindungsgemäße Schaltung auch an einem 110V-/60Hz- Wechselspannungsnetz betreiben, dann mit geänderten Werten für die Spulenelemente und die Kondensatorelemente.

Die Schaltung findet erfindungsgemäß im Mehrphasennetz Anwendung. In einem Dreiphasennetz mit den Phasen L1, L2, L3 sind alle Komponenten jeweils dreifach identisch vorhanden mit Ausnahme des gemeinsamen Neutralleiters N, der nur einmal vorhanden ist. Hier kann die Schaltung mit einem Dreiphasen-Joch ausgeführt werden. Die Schaltung kann in Stern- oder in Dreieckschaltung ausgeführt sein.

**Patentansprüche**

1. Dreiphasen-Schaltung, aufweisend drei Phasenleiter (L1, L2, L3) und einen Neutralleiter (N) eines Energienetzes, wobei jeder der drei Phasenleiter eine elektrische Phase (L1, L2, L3) führt, wobei jeder Phasenleiter gekoppelt ist mit jeweils einer Schaltung zum Anschluss an einen Phasenleiter (L1, L2, L3) und den Neutralleiter (N), die jeweilige Schaltung umfassend

einen ersten Leitungsstrang (L1.1), der eingangsseitig über ein erstes Diodenelement (D1) mit dem Phasenleiter (L1) verbindbar ist, einen zweiten Leitungsstrang (L1.2), der eingangsseitig über ein zweites Diodenelement (D2) mit dem Phasenleiter (L1) verbindbar ist, wobei die beiden Diodenelemente (D1, D2) mit Bezug zum Phasenleiter (L1, L2, L3) entgegengesetzt zueinander orientiert sind, wobei zwischen dem ersten Leitungsstrang (L1.1) und dem Neutralleiter (N) des Niederspannungsnetzes ein erstes Spulenelement (DR1) angeordnet ist und zwischen dem zweiten Leitungsstrang (L1.2) und dem Neutralleiter (N) ein zweites Spulenelement (DR2) angeordnet ist, wobei die beiden Spulenelemente (DR1, DR2) induktiv miteinander gekoppelt sind, und wobei zwischen dem ersten Leitungsstrang (L1.1) und dem Neutralleiter (N) ein erstes Kondensatorelement (C1.1) angeordnet ist und zwischen dem zweiten Leitungsstrang (L1.2) und dem Neutralleiter (N) ein zweites Kondensatorelement (C1.2) angeordnet ist,

wobei die ersten und die zweiten Kondensatorelemente (C1.1, C1.2) und die Spulenelemente (DR1, DR2) jeweils in Sternschaltung angeordnet sind.

2. Dreiphasen-Schaltung gemäß Anspruch 1, wobei die beiden Spulenelemente (DR1, DR2) über einen gemeinsamen Kern induktiv miteinander gekoppelt sind.

3. Dreiphasen-Schaltung gemäß Anspruch 1 oder 2, wobei die beiden Spulenelemente (DR1, DR2) einen Transformator mit dem Übersetzungsverhältnis 1 bilden, insbesondere identische Wicklungszahlen (n1, n2) ausweisen.

4. Dreiphasen-Schaltung gemäß einem der vorherigen Ansprüche, wobei das erste Spulenelement (DR1) und das erste Kondensatorelement (C1.1) so dimensioniert sind, dass sie bei einer Frequenz von 50 Hz einen Resonanzkreis bilden.

5. Dreiphasen-Schaltung gemäß einem der vorherigen Ansprüche, wobei das zweite Spulenelement (DR2) und das zweite Kondensatorelement (C1.2) so dimensioniert sind, dass sie bei einer Frequenz von 50 Hz einen Resonanzkreis bilden.

6. Dreiphasen-Schaltung gemäß einem der vorherigen Ansprüche, wobei die Bedingung gilt:

$$\omega\, L = 1/\omega\, C,$$

mit Kreisfrequenz $\omega = 2\pi\, f$ und wobei L die Induktivität jeweils des ersten Spulenelements (DR1) und des zweiten Spulenelements (DR2) und C die Kapazität jeweils des ersten Kondensatorelements (C1.1) und des zweiten Kondensatorelements (C1.2) ist.

7. Dreiphasen-Schaltung gemäß dem vorherigen Anspruch, weiter aufweisend: eine Dreieckschaltung zumindest dreier dritter Kondensatorelemente (C1), die eingangsseitig zwischen den drei Phasenleitern (L1, L2, L3) angeordnet ist.

8. Dreiphasen-Schaltung gemäß Anspruch 7, wobei die dritten Kondensatorelemente (C1) jeweils eine Kapazität von $100\,\mu F$ aufweisen.

9. Dreiphasen-Filterschaltung gemäß einem der Ansprüche 7 bis 8, weiter aufweisend eine erste Leistungsschaltervorrichtung, mittels welcher die dritten Kondensatorelemente (C1) von den Phasenleitern (L1, L2, L3) abtrennbar sind.

10. Dreiphasen-Schaltung gemäß einem der Ansprüche 7 bis 9, weiter aufweisend eine zweite Leistungsschaltervorrichtung, mittels welcher die ersten und die zweiten Kondensatorelemente (C1.1, C1.2) von den Phasenleitern abtrennbar sind.

**Claims**

1. Three-phase circuit, comprising three phase strands (L1, L2, L3) and a neutral conductor strand (N), wherein each one of the three phase strands conducts an electrical phase (L1, L2, L3), wherein each phase strand is coupled to one electrical circuit for connection to a phase conductor (L1, L2, L3) and to the neutral conductor (N), comprising the respective circuit.

a first line strand (L1.1), which can be connected to the phase conductor (L1) via a first diode element (D1) on the input side, a second line strand (L.2), which can be connected to the phase conductor (L1, L2, L3) via a second diode element (D2), wherein the two diode elements (D1, D2) are oriented opposite to each other with respect to the phase conductor (L1, L2, L3), wherein a first coil element (DR1) is arranged between the first line strand (L1.1) and the neutral conductor (N) of the low voltage network, and a second coil element (DR2) is arranged between the second line strand (L 1.2) and the neutral conductor (N), wherein the two coil elements (DR1, DR2) are coupled to each other inductively, and wherein

a first capacitor element (C1.1) is arranged between the first line strand (L1.1) and the neutral conductor (N), and a second capacitor element (C1.2) is arranged between the second line strand (L1.2) and the neutral conductor (N), wherein

the first and the second capacitor elements (C1.1, C1.2) and the coil elements (DR1, DR2) are arranged in star circuit, respectively.

2. Three-phase circuit according to claim 1, wherein the two coil elements (DR1, DR2) are coupled to each other via a common core.

3. Three-phase circuit according to claim 1 or 2, wherein the two coil elements (DR1, DR2) form a transformer with a transmission ratio of 1, in particular, having an identical number of windings (n1, n2).

4. Three-phase circuit according to any one of the preceding claims, wherein the first coil element (DR1) and the first capacitor element (C1.1) are dimensioned such that they form a resonance circuit at a frequency of 50 Hz.

5. Three-phase circuit according to any one of the preceding claims, wherein the second coil element (DR2) and the second capacitor element (C1.2) are dimensioned such that the form a resonance circuit at a frequency of 50 Hz..

6. Three-phase circuit according to any one of the preceding claims, wherein the following equation is valid:

$$\omega\, L = 1/\omega\, C,$$

with an angular frequency of $\omega = 2\pi\, f$ and wherein L is the inductance of the first coil element (DR1) and the second coil element (DR2) respectively, and C is the capacitance of the first capacitor element (C1.1) and the second capacitor element (C 1.2) respectively.

7. Three-phase circuit according to the preceding claim, further comprising: a delta circuit of at least three third capacitor elements (C1), which is arranged at the input side between the three phase strands (L1, L2, L3).

8. Three-phase circuit according to claim 7, wherein the third capacitor elements (C1) respectively have a capacity of 100 μF.

9. Three-phase circuit according to any one of claims 7 to 8, further comprising a first circuit breaker device, by means of which the third capacitor elements (C) can be separated from the phase strands (L1, L2, L3).

10. Three-phase circuit according to any one of claims 7 to 9, further comprising a second circuit breaker device, by means of which the first and the second capacitor elements (C1.1, C2.2) can be separated from the phase strands.

**Revendications**

1. Circuit triphasé présentant trois conducteurs de phase (L1, L2, L3) et un conducteur de neutre (N) d'un réseau d'énergie, chacun des trois conducteurs de phase représentant une phase électrique (L1, L2, L3), chaque conducteur de phase étant couplé respectivement à un circuit permettant la connexion à un conducteur de phase (L1, L2, L3) et au conducteur de neutre (N), chaque circuit respectif comprenant

une première voie de conduction (L1.1) qui peut être connectée, côté entrée, au conducteur de phase (L1) par l'intermédiaire d'un premier élément diode (D1), une deuxième voie de conduction (L1.2) qui peut être connectée, côté entrée, au conducteur de phase (L1) par l'intermédiaire d'un deuxième élément diode (D2), les deux éléments diodes (D1, D2) étant orientés, par rapport au conducteur de phase (L1, L2, L3), de manière opposée l'un à l'autre, un premier élément bobine (DR1) étant disposé entre la première voie de conduction (L1.1) et le conducteur de neutre (N) du réseau à basse tension, et un deuxième élément bobine (DR2) étant disposé entre la deuxième voie de conduction (L1.2) et le conducteur de neutre (N), les deux éléments bobines (DR1, DR2) étant couplés entre eux de manière inductive,
et un premier élément condensateur (C1.1) étant disposé entre la première voie de conduction (L1.1) et le conducteur de neutre (N), et un deuxième élément condensateur (C1.2) étant disposé entre la deuxième voie de conduction (L1.2) et le conducteur de neutre (N),

les premiers et les deuxièmes éléments condensateurs (C1.1, C1.2) et les éléments bobines (DR1, DR2) étant respectivement montés en étoile.

2. Circuit triphasé selon la revendication 1, dans lequel les deux éléments bobines (DR1, DR2) sont couplés entre eux de manière inductive par l'intermédiaire d'un noyau commun.

3. Circuit triphasé selon la revendication 1 ou 2, dans lequel les deux éléments bobines (DR1, DR2) forment un transformateur avec le rapport de transformation de 1, en particulier présentent des nombres d'enroulement (n1, n2) identiques.

4. Circuit triphasé selon l'une quelconque des revendications précédentes, dans lequel le premier élément bobine (DR1) et le premier élément condensateur (C1.1) sont dimensionnés de sorte à former, à une fréquence de 50 Hz, un circuit de résonance.

5. Circuit triphasé selon l'une quelconque des revendications précédentes, dans lequel le deuxième élément bobine (DR2) et le deuxième élément condensateur (C1.2) sont dimensionnés de sorte à former, à une fréquence de 50 Hz, un circuit de résonance.

6. Circuit triphasé selon l'une quelconque des revendications précédentes, dans lequel la condition suivante est remplie :

$$\omega\, L = 1/\omega\, C,$$

la fréquence angulaire étant $\omega = 2\pi f$ et L étant l'inductance respective du premier élément bobine (DR1) et du deuxième élément bobine (DR2) et C la capacité respective du premier élément condensateur (C1.1) et du deuxième élément condensateur (C1.2).

7. Circuit triphasé selon la revendication précédente, lequel présente en outre: une connexion triangle d'au moins trois troisièmes éléments condensateurs (C1) laquelle est disposée, côté entrée, entre les trois conducteurs de phase (L1, L2, L3).

8. Circuit triphasé selon la revendication 7, dans lequel les troisièmes éléments condensateurs (C1) présentent respectivement une capacité de 100 $\mu$F.

9. Circuit de filtrage triphasé selon l'une quelconque des revendications 7 à 8, lequel présente en outre un premier dispositif interrupteur de puissance grâce auquel les troisièmes éléments condensateurs (C1) peuvent être séparés des conducteurs de phase (L1, L2, L3).

10. Circuit triphasé selon l'une quelconque des revendications 7 à 9, lequel présente en outre un deuxième dispositif interrupteur de puissance grâce auquel les premiers et les deuxièmes éléments condensateurs (C1.1, C1.2) peuvent être séparés des conducteurs de phase.

**Fig. 1**

Fig. 2

a

b

Fig. 3

Fig. 4

315

196

175

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Power-factor correction in bridge and voltage-doubler rectifier circuits with inductors and capacitors. **REDL R et al.** APPLIED POWER ELECTRONICS CONFERENCE AND EXPOSITION, 1995. APEC '95. C ONFERENCE PROCEEDINGS 1995., TENTH ANNUAL DALLAS. IEEE, 05. Marz 1995, 466-472

- Bridgeless High-Power-Factor Buck Converter. **YUNGTAEK JANG et al.** IEEE TRANSACTIONS ON POWER ELECTRONICS. INSTITUTE OF ELECTRICAL AND ELECTRONICS ENGINEERS, 01. Februar 2011, vol. 26, 602-611